# EUROPEAN PATENT APPLICATION

(11) **EP 3 616 523 A1**
(43) Date of publication of application: **04.03.2020**
(21) Application number: 19191252.6
(22) Date of filing: 12.08.2019
(51) Int. Cl.: A21D 8/02, A21D 8/04, A21D 15/02, A21D 13/80, A23L 3/365

(54) **METHOD FOR PRODUCING BAKED CONFECTIONERY PRODUCTS DERIVED FROM PANETTONES, PANDOROS OR COLOMBAS**

(30) Priority: 03.09.2018 IT 201800008290
(71) Applicant: VERGANI SRL, 20128 Milano (IT)
(72) Inventor: VERGANI, Lorella, 20090 SEGRATE MI (IT); VERGANI, Cesare Stefano, 20155 MILANO (IT)
(74) Representative: Modiano, Micaela Nadia

(57) **Abstract**

A method for producing baked confectionery products derived from panettones, pandoros or colombas, comprising the steps of:
- mixing (101) food ingredients and raising thereof in order to obtain a risen dough;
- shaping (105) of the risen dough within a baking container suitable for the production of panettones, pandoros or colombas, in order to obtain a shaped dough;
- oven baking (107) of the shaped dough inside the baking container, in order to obtain an intermediate baked confectionery product;
- first cooling (108) of the intermediate product at the end of baking (107), in order to obtain a panettone, pandoro or colomba on the basis of the ingredients and of the baking container;
and further comprising the steps of:
- cutting the panettone, pandoro or colomba into slices (113);
- deep freezing (115) the slices obtained from the cutting (113);
- keeping (116, 118) the frozen slices at a deep freezing temperature until the moment of their consumption or administration.

## Description

The present invention relates to a method for producing baked confectionery products derived from panettones, pandoros or colombas.

Based on Italian Ministerial Decree of 22 July 2005, published in the Official Gazette no. 177 of 1 August 2005 and subsequently amended by Ministerial Decree dated 16 May 2017, article 1, "panettone" is defined as a soft dough baked confectionery product, obtained by natural fermentation from sourdough, shaped with a round base and an upper cracked crust and cut in a characteristic way, having a soft structure with elongated porosity and typical aroma of sourdough raising.

The dough of panettone contains the following ingredients:
a) wheat flour;
b) sugar;
c) grade A hen eggs or egg yolk derived from grade A hen eggs, or both, in such quantities as to ensure not less than four per cent in yolk;
d) butterfat, in a quantity of no less than sixteen per cent, in particular butter made directly and exclusively from cow milk creams with a butterfat content in a quantity of no less than sixteen per cent;
e) raisins and candied citrus fruit peels, in quantity of no less than twenty per cent;
f) natural yeast constituted by sourdough;
g) salt.

The minimum percentages of the yolk and of the butterfat, referenced to dry content, are referred to the dough, ready to be split, expressed on dry weight, inert ingredients not included.

For the purposes of the calculation of the percentage in yolk, the following reference parameters are fixed:
yolk/egg-white ratio: 35/65;
dry residue of the mixture: 0.235;
dry residue of the yolk: 0.43.

The minimum percentages of raisins and of candied citrus fruit peels, referenced to dry content, are referred to the dough, ready to be split, expressed on dry weight.

The yeast must be at most one per cent of the dough as such, ready to be split, inert ingredients included.

The basic dough of the panettone can be characterized by the absence of raisins or of candied citrus fruit peels or of both.

After a first mixing of the ingredients and a subsequent pause for rising, it is possible to provide a second completion mixing of the ingredients (at the confectioner's discretion) and a subsequent pause for rising, after which the risen dough thus obtained is placed in a baking container, in which it is shaped after a further pause for rising in order to be then transferred into the baking oven.

When baking ends, which for 1 kg of panettone can last 50 minutes at 190°C, a cooling step is performed which, in the case of panettones, is on the order of ten hours (typically 12 hours) and occurs by keeping the panettone upside down. The finished product is then packaged and stored at ambient temperature, for its subsequent distribution and commercialization.

The definitions of pandoro and colomba are given in articles 2 and 3 respectively of the same Ministerial Decree.

Panettone, as well as pandoro and colomba, is a seasonal Italian confectionery product with an approximate weight of 750 g - 1 kg and must thus be cut into slices at the time of individual consumption.

Packaged panettone has a shelf life of about nine months, but after the first two or three months a qualitative deterioration thereof occurs due to the loss of humidity and the oxidation of the fats.

In extracontinental countries, such as the USA, Australia or South America, the product has to leave Italy about two months before the period in which it is typically consumed (Christmas) and therefore the product that reaches the table of the consumer will never be like the fresh one.

Another problem derives from the fact that once a slice of panettone has been cut, the slice and the remaining panettone dry rapidly.

The aim of the present invention is to provide a method for the industrial production of panettones, pandoros or colombas that is capable of improving the background art in one or more of the aspects mentioned above.

Within this aim, an object of the invention is to avoid the deterioration of the freshly cut panettone slice.

Another object of the invention is to allow the consumption of the panettone as freshly baked even many months after its production.

A further object of the present invention is to overcome the drawbacks of the background art in a manner that is alternative to any existing solutions.

Another object of the invention is to provide a production method that is highly reliable, relatively easy to provide and at competitive costs.

This aim and these and other objects that will become better apparent hereinafter are achieved by a method according to claim 1, optionally provided with one or more of the characteristics of the dependent claims.

Further characteristics and advantages of the invention will become better apparent from the description of a preferred but not exclusive embodiment of the method according to the invention, illustrated by way of non-limiting example in the accompanying drawings, wherein:
Figure 1 is a view of a method for producing panettones of a known type;

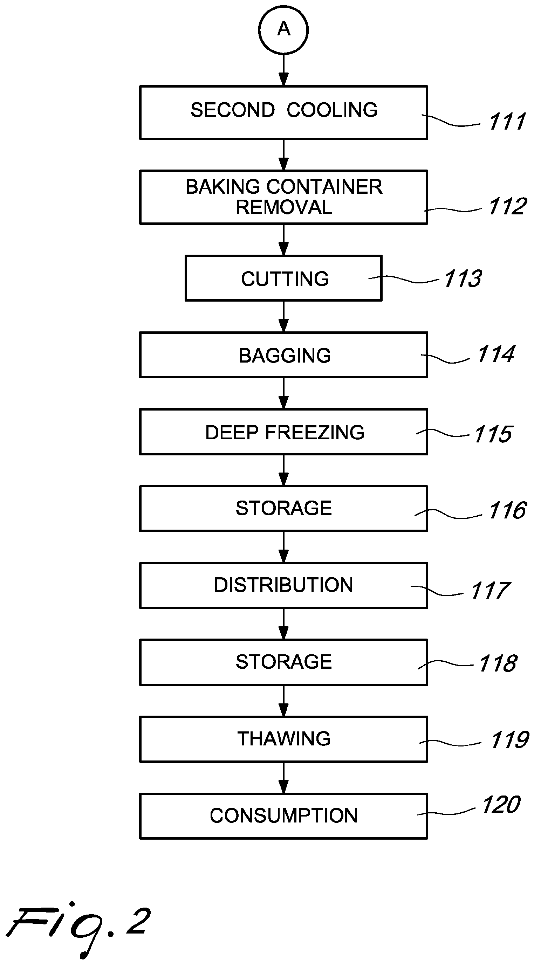

Figure 2 is a view a method according to a preferred embodiment of the invention.

With reference to the figures, the method according to the invention, generally designated by the reference numeral 1, comprises a first part of production of a panettone, pandoro or colomba according to the traditional method.

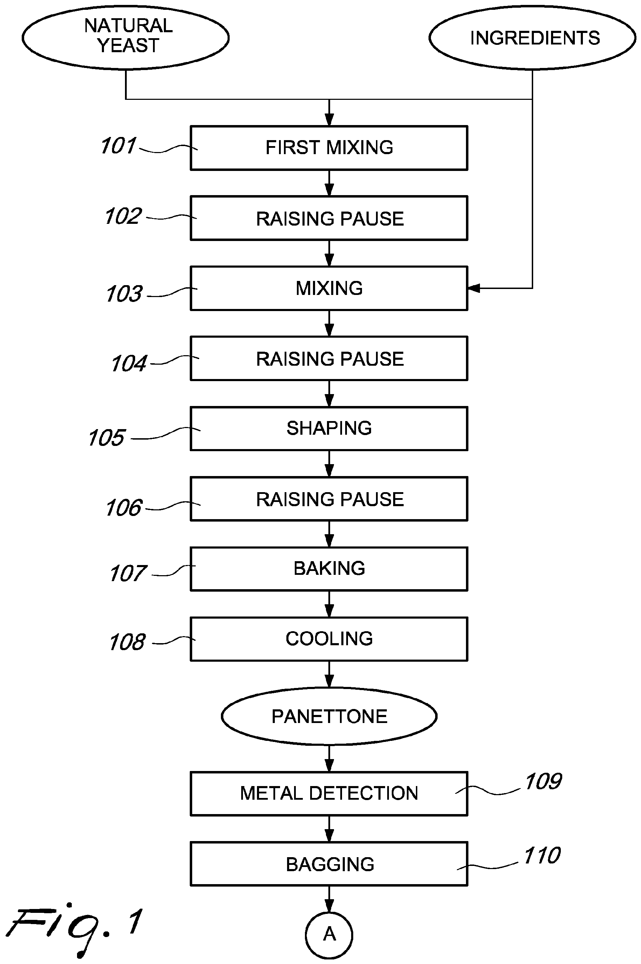

In particular, for panettone the reference method is the one shown in Figure 1 and explained in the "Disciplinare di produzione del panettone tipico della tradizione artigiana milanese" ("Product specification of the typical panettone of Milanese artisan tradition") of the Chamber of Commerce, Industry, Craft and Agriculture of Milan (September 2003).

After a first mixing 101 of the ingredients with the natural yeast and a subsequent pause for rising 102, there can be a second mixing 103, in which the remaining ingredients (at the confectioner's discretion) are optionally added, and a following pause for rising 104. The ingredients concerned are those indicated in Italian Ministerial Decree of 22 July 2005, published in Official Gazette no. 177 of 1 August 2005, amended by Ministerial Decree of 16 May 2017 and published in Official Gazette no. 136 of 14 June 2017, and thus they are considered well-known in the field of Italian confectionery.

The dough thus risen is then split and placed in respective baking containers, in order to perform its shaping 105, i.e., allow it, by virtue of a further pause for rising 106, to take the preset typical shape of panettone or, in the methods not shown according to the invention, of pandoro or colomba.

In the case of panettone, the baking container is typically a paper cup-like vessel.

Subsequently, the risen and shaped dough is placed in an oven while keeping it in the baking container. The oven baking step 107, which typically for 1 kg of dough is reached after 50 minutes at 190°C, is followed by a first cooling step 108, in which the product is left to cool at ambient temperature. In the case of panettone, the product is left to cooling upside down for about 12 hours.

Again in the case of panettone, but also in the case of colomba, the baking container remains stably associated with the food product, while in the case of pandoro the baking container (more properly, the mold) is removed during cooling.

Preferably, after this first cooling 108, the product is passed through a metal detector (step 109) in order to detect the unintentional presence of any metals and is optionally inserted in a plastic bag, for example made of polypropylene (step 110).

At this point, according to a preferred embodiment of the invention, a second cooling step 111 is performed, this time forced cooling at a temperature comprised between 5°C and 20°C, in order to allow the fats of the panettone to solidify, so as to facilitate the subsequent steps.

The baking container, if still present, is removed (step 112) and then a step 113 for cutting the product into slices is performed, preferably so that each slice has a weight that corresponds to a portion that can be consumed by a single person, i.e., typically lower than 100 g.

Advantageously, the cutting that is performed is of the ultrasound type, in order to avoid compression and shredding of the product, but in any case it can be performed by means of a serrated blade. Cutting is facilitated by the fact that the second cooling step 111 has been performed.

In any case, the cutting 113 according to the invention is performed on the freshly baked product, and therefore the slices obtained by the cutting 113 still have all the properties of the fresh product.

These slices are then deep frozen (step 115) by inserting them for example in a blast chiller adapted to bring them in all of their points to a deep freezing temperature, which would be -18°C or lower.

By virtue of the cutting 113 that precedes the deep freezing 115, it is possible to deep freeze in a relatively short time a substantial mass of a food product such as a panettone, a pandoro or a colomba which otherwise could not be deep frozen except in a very long time, degrading its characteristics in that case.

Before the deep freezing 115, the slices can be inserted in a humidity-tight enclosure (step 114), for example a plastic (polypropylene) bag or pouch. The enclosure can be single or can contain a plurality of the slices obtained by cutting. For example, the enclosure can be the same plastic bag that contained the product during the second cooling step 111.

The bagged slices are then stored, keeping them deep frozen at a temperature of -18°C or less (step 116), and are subsequently distributed in commercial establishments (for example, coffee shops) by means of refrigerated goods logistics (step 117).

During transport and new storage at the recipient (step 118) it is preferable that the temperature of the slice in all its points does not fluctuate upward more than 3°C with respect to the deep freezing temperature.

Before consumption 120, the slice is allowed to thaw in a non-forced manner (step 119), i.e., by leaving it at ambient temperature. During the thawing step 119, in the method according to the invention the slice must however be kept in a humidity-tight environment, for example in the same enclosure that contained it during storage 118, or in a bell or a display adapted to prevent loss of humidity.

The slice obtained from the method according to the invention thus corresponds to a slice freshly cut from a fresh panettone, i.e., with substantially the same organoleptic characteristics.

This allows to avoid, during production, the use of additives aimed at extending the shelf life of the panettone, for example mono- and diglycerides of fatty acids, although in some cases it can be preferable to maintain their use anyway.

In practice it has been found that the invention achieves the intended aim and objects.

The invention thus conceived is susceptible of numerous modifications and variations, all of which are within the scope of the appended claims. In particular, although the production of a panettone has been described in detail, the steps shown in Figure 1 may be replaced by the traditional production steps of a pandoro or a colomba.

All the details may furthermore be replaced with other technically equivalent elements.

The disclosures in Italian Patent Application No. 102018000008290 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A method for producing baked confectionery products derived from panettones, pandoros or colombas, comprising the steps of:
- mixing (101) food ingredients and raising thereof in order to obtain a risen dough;
- shaping (105) of the risen dough within a baking container suitable for the production of panettones, pandoros or colombas, in order to obtain a shaped dough;
- oven baking (107) of the shaped dough inside said baking container, in order to obtain an intermediate baked confectionery product;
- first cooling (108) of the intermediate product at the end of baking (107), in order to obtain a panettone, pandoro or colomba on the basis of said ingredients and of said baking container;
**characterized in that** it further comprises the steps of:
- cutting said panettone, pandoro or colomba into slices (113);
- deep freezing (115) the slices obtained from said cutting (113);
- keeping (116, 118) the frozen slices at a deep freezing temperature until the moment of their consumption or administration.

2. The method according to claim 1, **characterized in that** it comprises, after said keeping step (116, 118), a step of thawing (119) at least one of said deep frozen slices, said thawing being performed in a humidity-tight environment.

3. The method according to claim 2, wherein, in said thawing step (119), said at least one slice is allowed to thaw at ambient temperature.

4. The method according to one or more of the preceding claims, wherein said humidity-tight environment is a closed enclosure which is humidity-tight and contains one or more of said slices, or a bell or a display, which is humidity-tight and contains one or more of said slices.

5. The method according to one or more of the preceding claims, wherein, in said keeping step (116, 118), said slices are enclosed in at least one humidity-tight enclosure.

6. The method according to claim 5, wherein said enclosure contains a respective one of said slices.

7. The method according to one or more of the preceding claims, wherein said cut (113) is an ultrasound cut.

8. The method according to one or more of the preceding claims, wherein said first cooling is followed by a second cooling step (111) at a temperature comprised between 5°C and 20°C, in order to allow solidification of the fats and facilitate said cut (113).

9. The method according to one or more of the preceding claims, wherein said deep freezing (115) of the slices is performed by means of a blast chiller.

10. The method according to one or more of the preceding claims, wherein, between said deep freezing step (115) and said thawing step (119), there is a conveyance and distribution step (117), in which said slices are kept refrigerated so as to prevent upward fluctuations of their temperature beyond 3°C.
